## Europäisches Patentamt

## European Patent Office

## Office européen des brevets

(19)

(11) Publication number: **0 052 924**

**B1**

(12) **EUROPEAN PATENT SPECIFICATION**

(45) Date of publication of patent specification: **27.06.84**

(51) Int. Cl.³: **G 21 C 3/34**

(21) Application number: **81304250.4**

(22) Date of filing: **16.09.81**

(54) Spacer grids for bundles of rods.

(30) Priority: **21.11.80 US 209087**

(43) Date of publication of application:
**02.06.82 Bulletin 82/22**

(45) Publication of the grant of the patent:
**27.06.84 Bulletin 84/26**

(84) Designated Contracting States:
**CH DE FR GB IT LI**

(56) References cited:
**FR - A - 1 584 335**
**FR - A - 2 099 595**
**FR - A - 2 337 407**
**FR - A - 2 365 861**
**GB - A - 1 153 743**
**LU - A - 66 557**

(73) Proprietor: **THE BABCOCK & WILCOX COMPANY**
**1010 Common Street P.O. Box 60035**
**New Orleans Louisiana 70160 (US)**

(72) Inventor: **Larson, Jeffrey Gordon**
**102 Pilgrim Road**
**Lynchburg Virginia 24502 (US)**

(74) Representative: **Cotter, Ivan John et al,**
**D. YOUNG & CO. 10 Staple Inn**
**London WC1V 7RD (GB)**

## Description

This invention relates to spacer grids for bundles of rods, for example fuel rods of nuclear reactor fuel assemblies.

The core of a nuclear reactor typically includes a plurality of fuel assemblies arranged in closely spaced relationship in an array, the periphery of the array approximating a cylinder. The fuel assemblies typically include a plurality of elongate fuel rods held in spaced relationship in an array by a plurality of spacer grids.

To load or unload a fuel assembly into or from the reactor core, it is necessary to move the fuel assembly with respect to fuel assemblies adjacent thereto. This relative movement of adjacent fuel assemblies has resulted in the problem of hangup between the spacer grids of the adjacent assemblies. Hangup can occur between the sides of spacer grids of laterally adjacent fuel assemblies or between the corners of spacer grids of diagonally adjacent fuel assemblies. The hangup can result in irreparable damage to the spacer grids and/or fuel rods, and may cause torn-away pieces to be left in the core, which pieces must be retrieved.

Many attempts have been made to solve the problem of handling interaction and strength of fuel assembly spacer grids. One known solution to the problem of hangup between diagonally adjacent assemblies at the corners of the spacer grids has been to chamfer the upper and lower corners of an exterior grid strip of the spacer grid. This configuration is superior to the unchamfered configuration, but does not completely eliminate the possibility of diagonal hangup.

In one known arrangement wherein chamfers are provided at the corners of a spacer grid, the corners possess a shallow lead-in chamfer which reduces the potential for hangup, but there is still the probability of corner damage should diagonally adjacent fuel assemblies come into contact. The chamfer angle for keyable spacer grids is limited by the constraints imposed by the keying window and soft stop dimensional requirements. As such, the lead-in angle is too shallow to develop effective lateral forces to separate the fuel assemblies when contact occurs, and grid damage may result.

Another known arrangement overcomes the disadvantage of the shallow chamfer angle by providing a short steep chamfer on the tips of corners of a spacer grid. This configuration has not been used because of the likelihood that unsupported top points of the chamfer would snag on adjacent grids and thereby cause an even more severe grid damage problem. Accordingly, the chamfers of neither of the above-outlined known arrangements solve the hangup problem between spacer grids of diagonally adjacent fuel assemblies.

For a description of a chamfered-corner grid as mentioned above, reference should be made to US Patent No. 3 932 216, which discloses a spacer grid for a bundle of rods extending longitudinally in spaced generally parallel relationship, the spacer grid comprising spacing means for holding the rods in spaced, generally parallel relationship, the spacing means including an exterior grid strip circumscribing the bundle of rods along the periphery thereof, the grid strip having first and second ends and having formed therein a bend that extends substantially parallel to the longitudinal direction of the strip.

According to the present invention there is provided a spacer grid for a bundle of rods extending longitudinally in spaced generally parallel relationship, the spacer grid comprising spacing means for holding the rods in spaced, generally parallel relationship, the spacing means including at least one exterior grid strip circumscribing the bundle of rods along the periphery thereof, the at least one grid strip having first and second ends and having formed therein at least one bend that extends substantially parallel to the longitudinal direction of the strip, characterised in that a plurality of sloping corner gussets are formed between the edge of the strip and the at least one bend at the first and second ends and are angled inwardly across each of a plurality of peripheral corners of the grid.

A preferred embodiment of the present invention described below overcomes or at least alleviates greatly the problem of diagonal spacer grid hangup by providing inclined surface gussets at the upper and lower corners of exterior grid strips. In this embodiment the gussets are provided by shaping the upper and lower corners of the exterior grid strips. The corner gussets prevent corner hangup and also strengthens the corners whereby, should hangup occur, the likelihood of grid damage is reduced. The corner lead in and stand off are sufficient to avoid hangup between fuel assemblies having like spacer grid designs. Furthermore, the corner-to-corner hangup potential is minimised for adjacent bundles (e.g. nuclear reactor fuel assemblies) employing unlike spacer grid designs.

The invention will now be further described, by way of illustrative and non-limiting example, with reference to the accompanying drawings, in which:

Figure 1 is a plan view showing a portion of an array of nuclear reactor fuel assemblies;

Figure 2 is a partial elevational view showing diagonally adjacent fuel assemblies having known spacer grids;

Figure 3 is a partial elevational view showing another known spacer grid;

Figure 4 is a partial elevational view showing yet another known spacer grid;

Figure 5 is a partial perspective view showing a spacer grid according to a preferred embodiment of the present invention;

Figure 6 is a partial plan view of the spacer grid of Figure 5;

Figure 7 is a partial elevational view showing diagonally adjacent fuel assemblies each having spacer grids according to the preferred embodiment of the present invention; and

Figure 8 is a partial elevational view showing diagonally adjacent fuel assemblies of which only one has a spacer grid according to the preferred embodiment of the present invention.

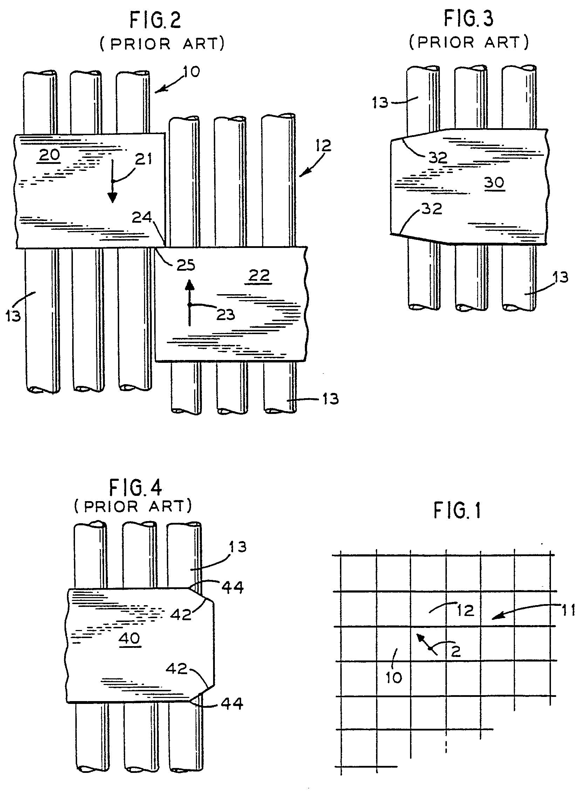

Figure 1 is a plan view of a nuclear reactor core 11 comprising a plurality of fuel assemblies. Spacer grids of diagonally adjacent fuel assemblies 10 to 12 may hang up at the corner indicated by an arrow 2 upon their relative movement.

Figure 2 shows an elevational view of the diagonally adjacent fuel assemblies 10 and 12 viewed in the direction of the arrow 2 of Figure 1. Known spacer grids 20 and 22 hold the fuel rods 13 in an array in spaced parallel relationship. Relative motion of the assemblies 10 and 12 is represented by arrows 21 and 23, respectively.

No lead-in chamfer of the corners 24, 25 of the spacer grids 20, 22 is provided in Figure 2. Accordingly, should diagonally adjacent fuel assemblies 10 and 12 contact one another while the assemblies 10 and 12 are being inserted or withdrawn from the core 11, hangup damage to the grids 20 and 22 is extremely likely.

Figure 3 shows one known arrangement wherein chamfers 32 are provided at the corners of a spacer grid 30. The corner represented in Figure 3 possesses a shallow lead-in chamfer which reduces the potential for hangup, but there is still the probability of corner damage should diagonally adjacent fuel assemblies come into contact. The chamfer angle for keyable spacer grids is limited by the constraints imposed by the keying window and soft stop dimensional requirements. As such, the lead-in angle is too shallow to develop effective lateral forces to separate the fuel assemblies when contact occurs, and grid damage may result.

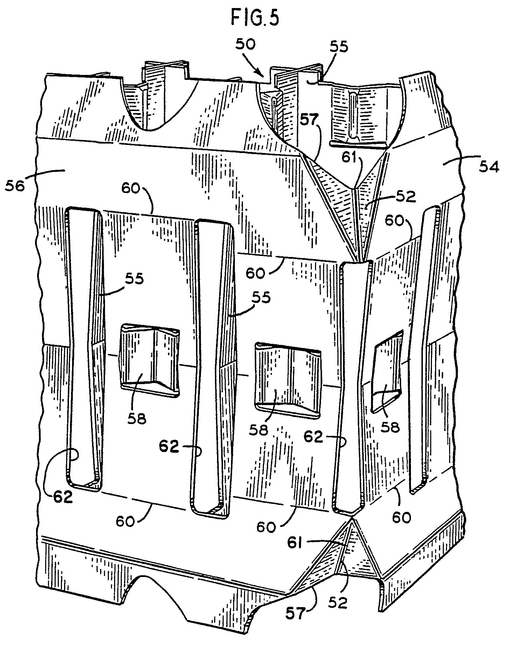

Figure 4 depicts a corner configuration which overcomes the disadvantage of the shallow chamfer angle by providing a short steep chamfer on the tips of corners 42 of a spacer grid 40. This configuration has not been used because of the likelihood that unsupported top points 44 of the chamfer would snag on adjacent grids and thereby cause an even more severe grid damage problem. Accordingly, the chamfers 42 and 32 of Figures 3 and 4 do not solve the hangup problem between spacer grids of diagonally adjacent fuel assemblies.

Figure 5 shows a spacer grid 50 constituting a preferred embodiment of the invention. The spacer grid 50 includes four exterior grid strips, of which strips 54 and 56 are visible in Figure 5, and a plurality of interlacing interior grid strips 55. The exterior grid strips 56 and 54, as well as the interior grid strips 55, are provided with stops 58 for supporting a generally rectangular bundle of fuel rods in cells formed by the strips 54, 55 and 56 in a known manner. The spacer grid 50 is a keyable type and key windows 62 are thus provided. A number of slight bends 60 in the exterior strips 54 and 56 define the longitudinal limits of the key windows 62.

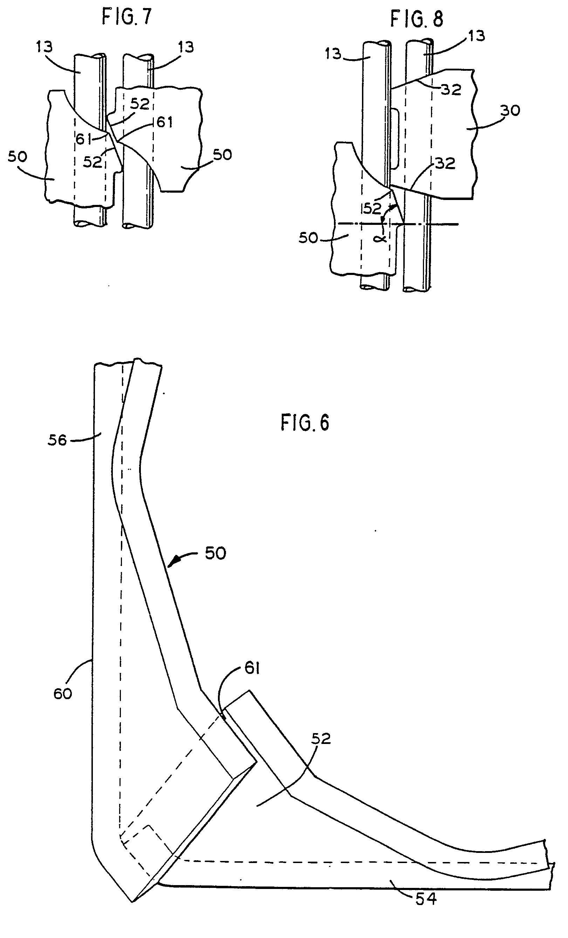

The prior method of joining exterior grid strips at a 90 degree angle has been improved in Figure 5 by the formation at each corner of the spacer grid 50 of an angle joint — namely a gusset 52 — which slopes across and truncates the corner of the spacer grid 50 formed by the joining of the exterior strips 54 and 56 at a seam 61. The present corner design, in addition to having a steep gusset angle $\alpha$ (Figure 8), has a relatively steep edge 57, the combination of which effectively separates interacting diagonally adjacent fuel assemblies and thereby precludes hangup.

The angle $\alpha$ of the corner gusset 52 is such that when two diagonally adjacent assemblies each having like grids 50 interact as in Figure 7, corner hangup is extremely unlikely. The spacer grid 50 is also designed to provide resistance to corner hangup with assemblies of known design. Figure 8 demonstrates corner interaction of unlike assemblies, one employing the grid 50 of Figure 5 and the other employing a known grid like the grid 30 shown in Figure 3. The likelihood of hangup is reduced in these circumstances but, should it occur, strengthening of the corner of the grid 50 provided by the gusset 52 significantly reduces the likelihood of corner damage thereto.

Figure 6 shows a plan view of the corner of the grid 50 of Figure 5. In this view it can be seen that the gusset 52 is formed by contouring the grid strips 56 and 54 to overlap at the seam 61. The seam 61 is typically effected by welding.

As can best be seen from Figure 5, some of the key windows 62 are located at the corners of the exterior grid strips 54, 56, whereby the exterior strips are joined to each other at the corners only by the gussets 52.

The spacer grid 50 of Figure 5 is of the keyable type. The grid 50 was disclosed for illustrative purposes only and it should be appreciated that providing the corner gusset to both strengthen the grid and minimise corner-to-corner hangup may be employed in any type of spacer grid design.

## Claims

1. A spacer grid for a bundle of rods extending longitudinally in spaced generally parallel relationship, the spacer grid comprising spacing means for holding the rods in spaced, generally parallel relationship, the spacing means including at least one exterior grid strip (54, 56) circumscribing the bundle of rods along the periphery thereof, the at least one grid strip having first and second ends and having formed therein at least one bend (60) that extends substantially parallel to the longitudinal direction of the strip, characterised in that a plurality of sloping corner gussets (52) are formed between the edges of the strip and the at least one bend (60) at the first and second ends and are angled inwardly across each of a plurality of peripheral corners of the grid.

2. A spacer grid according to claim 1, wherein the bundle of rods is generally rectangular in cross-section and there are four said exterior grid strips each having two ends and each positioned on a corresponding side of the bundle and joined at the ends thereof to two of the other strips at respective rectangle corners.

3. A spacer grid according to claim 2, wherein each of the corner gussets (52) is formed from an adjacent pair of a plurality of strip corners defined by the intersection of the ends of the strips (54, 56) and the edges of the strips (54, 56), the strip corners adjoining the strips and being angled and affixed together to form sloping surfaces.

4. A spacer grid according to claim 3, wherein the spacing means is keyable and a plurality of key windows (62) are provided in the exterior strips (54, 56), some of the key windows (62) being located at the rectangle corners, where the exterior strips are joined to each other only by the sloping surfaces.

**Patentansprüche**

1. Abstandsgitter für ein Bündel von Stäben, die sich längs im Abstand und im allgemeinen parallel erstrecken, mit Abstandsmitteln für das Halten der Stäbe im Abstand und in im allgemeinen paralleler Lage, wobei die Abstandsmittel mindestens ein äußeres Gitterband (54, 56) aufweisen, welches das Bündel von Stäben längs seines Umfanges umschreibt, wobei das mindestens eine Gitterband erste und zweite Enden aufweist und im Band mindestens eine Krümmung (60) vorgesehen ist, die sich im wesentlichen parallel zur Längsrichtung des Bandes erstreckt, dadurch gekennzeichnet, daß eine Vielzahl von geneigten Eckenkeilen (52) zwischen den Kanten des Bandes und der mindestens einen Krümmung (60) an dem ersten und zweiten Ende gebildet sind und unter einem Winkel einwärts quer zu jeder einer Vielzahl von Umfangsecken des Gitters angestellt sind.

2. Abstandsgitter nach Anspruch 1, wobei das Bündel von Stäben einen im allgemeinen rechteckigen Querschnitt hat und vier äußere Gitterbänder vorgesehen sind, deren jedes zwei Enden hat und auf einer entsprechenden Seite des Bündels angeordnet und an seinen Enden mit zwei der anderen Bänder an entsprechenden rechtwinkligen Ecken verbunden ist.

3. Abstandsgitter nach Anspruch 2, wobei jede der Eckenkrümmungen (52) aus einem benachbarten Paar einer Mehrzahl von Bandecken gebildet ist, welche durch den Schnitt der Enden der Bänder (54, 56) und die Kanten der Bänder (54, 56) gebildet sind, wobei die Bandecken mit den Bändern verbunden und winklig angestellt und zusammen befestigt sind, um schräge Oberflächen zu bilden.

4. Abstandsgitter nach Anspruch 3, dadurch gekennzeichnet, daß das Abstandsmittel verkeilbar ist und eine Vielzahl von Keilfenstern (62) in den äußeren Bändern (54, 56) vorgesehen ist, wobei einige der Keilfenster (62) an den rechtwinkligen Ecken angeordnet sind, wo die äußeren Bänder nur durch die schrägen Oberflächen miteinander verbunden sind.

**Revendications**

1. Grille d'espacement pour faisceau de barres s'étendant longitudinalement en relation d'espacement et de parallélisme général, la grille d'espacement comprenant des moyens d'espacement pour le maintien des barres en relation d'espacement et de parallélisme général, les moyens d'espacement comportant au moins une bande de grille extérieure (54, 56) entourant le faisceau de barres sur son pourtour, là ou chaque bande de grille ayant une première et une seconde extrémités et présentant au moins un coude (60) qui s'étend sensiblement parallèlement à la direction longitudinale de la bande, caractérisée en ce qu'une pluralité de goussets de coin en pente (52) sont façonnés entre les bords de la bande et le ou chaque coude (60) aux première et seconde extrémités et sont coudés vers l'intérieur en travers de chacun d'une pluralité de coins périphériques de la grille.

2. Grille d'espacement selon la revendication 1, caractérisée en ce que le faisceau de barres est à section de forme générale rectangulaire et il existe quatre desdites bandes de grille extérieures ayant chacune deux extrémités et disposées chacune sur un côté correspondant du faisceau et jointes à leurs extrémités à deux des autres bandes en des coins de rectangle respectifs.

3. Grille d'espacement selon la revendication 2, caractérisée en ce que chaque gousset de coin (52) est façonné à partir d'une paire adjacente d'une pluralité de coins de bandes définis par l'intersection des extrémités des bandes (54, 56) et les bords des bandes (54, 56), les coins de bande étant attenants aux bandes et étant coudés et fixés l'un à l'autre pour former des surfaces en pente.

4. Grille d'espacement selon la revendication 3, caractérisée en ce que les moyens d'espacement sont à clavetage et une pluralité de fenêtres â clavette (62) sont prévues dans les bandes extérieures (54, 56), certaines des fenêtres à clavette (62) étant situées aux coins du rectange, où les bandes extérieures ne sont jointes l'une à l'autre que par les surfaces inclinées.

FIG.2
(PRIOR ART)

FIG.3
(PRIOR ART)

FIG.4
(PRIOR ART)

FIG.1

1

## FIG.5

**0 052 924**

FIG.7

FIG.8

FIG.6

3